# EUROPEAN PATENT APPLICATION

(11) **EP 4 403 070 A1**
(43) Date of publication of application: **24.07.2024**
(21) Application number: 24152539.3
(22) Date of filing: 18.01.2024
(51) Int. Cl.: A47B 3/06, A47B 13/00, A47B 13/06, A47B 13/08, A47B 13/02, F16B 12/52, F16B 12/44

(54) **A DETACHABLE OUTDOOR TABLE**

(30) Priority: 18.01.2023 CN 202320114626 U
(71) Applicant: Yotrio Group Co., Ltd., Linhai City Zhejiang 317004 (CN)
(72) Inventor: Zhang, Qing, Linhai City, 317004 Zhejiang Province (CN); Xie, Jianqiang, Linhai City, 317004 Zhejiang Province (CN); Yao, Qianqian, Linhai City, 317004 Zhejiang Province (CN)
(74) Representative: Schulz Junghans Patentanwälte PartGmbB

(57) **Abstract**

The invention relates to detachable outdoor table, comprising a frame, table legs and connectors, wherein the frame comprises transversal frames and longitudinal frames, the connectors are provided between the transversal frames and the longitudinal frames, the table legs are inserted in and fitted on lower sides of the connectors, supporting brackets are provided on an inner sidewall of the transversal frame, a table board is lap-jointed and provided above the supporting brackets, and the table board is a split structure, which is formed by arranging a plurality of panels.

## Description

### TECHNICAL FIELD

The present utility model relates to the field of outdoor furniture, and in particular to a detachable outdoor table.

### BACKGROUND ART

In recent years, outdoor camping has gradually become a popular way of travel. When camping, tents, tables and chairs, etc. are usually used. Outdoor leisure tables and chairs are mainly used for resting during outdoor activities, including garden tables, etc. Most of the existing outdoor leisure tables and chairs include a table top and table legs, and the table legs are fixedly connected to four end corners of the table top. This structure has a defect as follows: during the transportation, the product has a large footprint, increasing the transportation cost.

To that end, as in Publication No. CN208144762U, disclosed is a leg-detachable garden table. However, the table board in this patent is still a unitary structure as a whole, causing the overall area thereof to be relatively large, which is unfavorable to product handling. In addition, currently, in order to cooperate with the marketing of existing e-commerce products, it is a design trend to package products in small volumes. Meanwhile, in order to facilitate the assembly by a user and realize quick-assembly-quick-disassembly, the present application designs a detachable outdoor table.

### SUMMARY OF THE UTILITY MODEL

In order to make up for the deficiencies of the prior art, the present utility model provides a technical solution of a detachable outdoor table which is easy to assemble and has a small storage volume after disassembly.

The detachable outdoor table includes a frame, table legs and connectors. The frame includes transversal frames and longitudinal frames. The connectors are provided between the transversal frames and the longitudinal frames. The table legs are inserted in and fitted on lower sides of the connectors. Supporting brackets are provided on an inner sidewall of the transversal frame. A table board is lap-jointed and provided above the supporting brackets. The table board is a split structure, which is formed by arranging a plurality of panels.

Further, the connector includes connecting ends perpendicular to each other. The connecting ends are provided transversally. The connecting ends are respectively provided with positioning posts, and inserted in and fitted with ends of the transversal frame and/or the longitudinal frame through the positioning posts.

Further, the connecting end is provided with a through-hole. The ends of the transversal frame and the longitudinal frame are provided with a threaded hole. The through-hole and the threaded hole are provided opposite to each other, and fitted and connected through a stud.

Further, the connector is provided with an inserting groove, and a top end of the table leg is provided with an inserting bar that fits the inserting groove;
the inserting groove is provided between two sets of connecting ends.

Further, an upper end cover is provided on an upper portion of the connector.

Further, the top of the table leg is provided with a connecting base, and the inserting bar is provided on an upper side of the connecting base.

Further, an edge of an upper end face of the connecting base is provided with a limiting rib, and the connecting base is inserted in the table leg with the limiting rib abutting and fitting with the table leg.

Further, supporting bases are provided on an inner sidewall of the longitudinal frame. The supporting base is an L-shaped bracket, and an upper side of the supporting base is flush with an upper end face of the longitudinal frame.

Further, the supporting bracket is an L-shaped bracket, and the supporting bracket is flush with an upper end face of the transversal frame. The supporting brackets are provided in multiple sets, which are distributed and provided under the panels.

Compared to the prior art, the present utility model has the following advantages:
The table board is a split structure, which is formed by arranging multiple sets of panels side by side. After disassembly, the table board can be folded and stored with a small footprint. The transversal frames, the longitudinal frames and the table legs are connected through the connectors, which facilitates assembly, as well as storage after disassembly, which facilitates express transportation.

The present solution has a small packaging volume after disassembly, is easy to disassemble or assemble, and is simple in structure.

### BRIEF DESCRIPTION OF THE DRAWINGS

Fig. 1 is a schematic diagram of a structure of the present utility model;
Fig. 2 is a schematic diagram of a bottom structure of the present utility model;
Fig. 3 is a schematic diagram of assembly of a table board of the present utility model; and
Fig. 4 is a schematic diagram of assembly of connectors with table legs and a frame.

In the figures: 1 table leg; 101 inserting bar; 102 connecting base; 103 limiting rib; 2 connector; 201 connecting end; 202 positioning post; 203 through-hole; 204 stud; 205 inserting groove; 206 upper end cover; 3 transversal frame; 301 supporting bracket; 4 longitudinal frame; 401 supporting base; 5 table board; 501 panel; 6 threaded hole.

### DETAILED DESCRIPTION

The present utility model is further illustrated below with reference to the accompanying drawings.

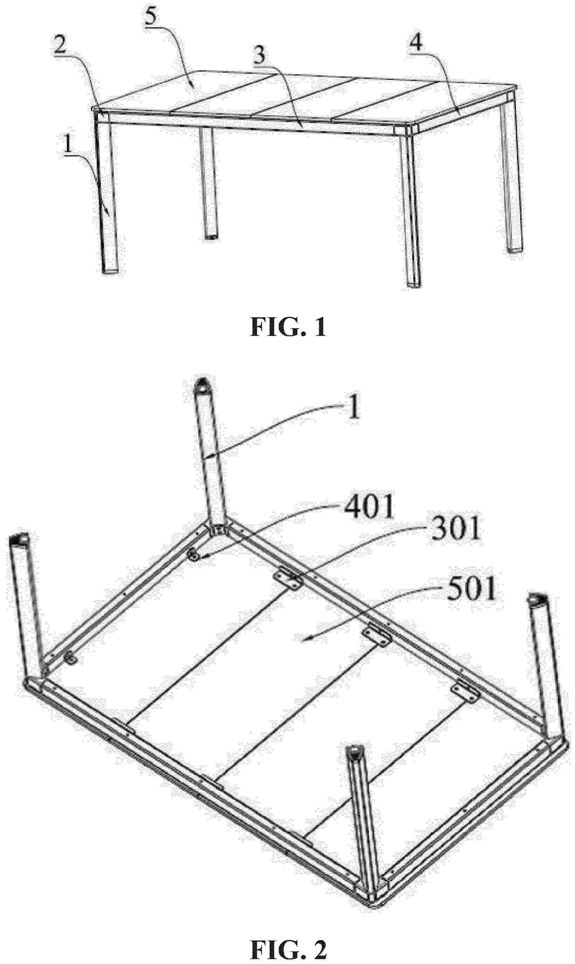

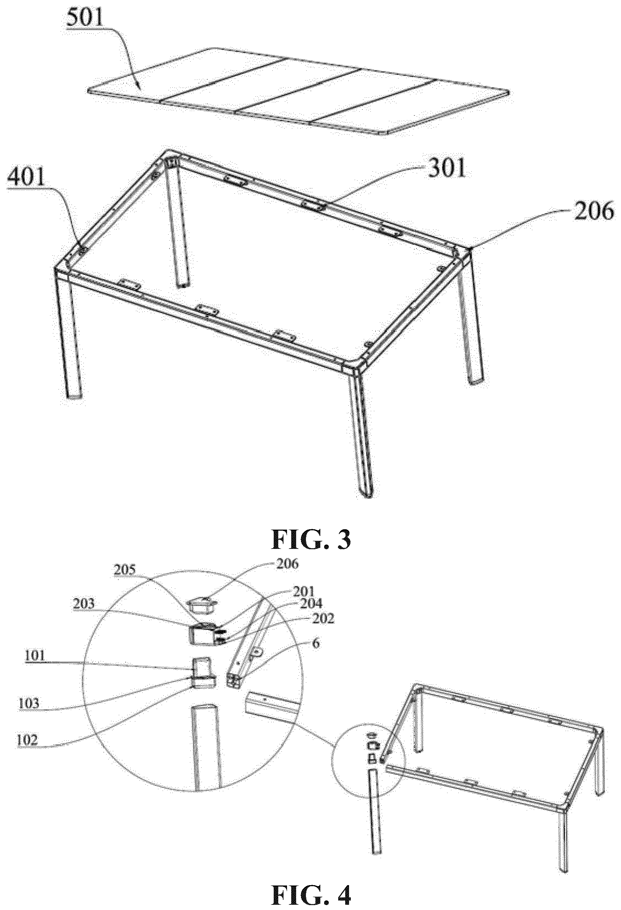

As shown in Figs. 1-4, a detachable outdoor table is formed by combining a frame, table legs 1, connectors 2 and a split modular table board 5. The frame includes two sets of transversal frames 3 and two sets of longitudinal frames 4, which fitted and connected through the connectors 2, respectively, to form the frame. The top of the table leg 1 is inserted and provided with a connecting base 102. The connecting base 102 is provided with an inserting bar 101 in its upper portion, and forms an insert-fit with an inserting groove 205 of the connector 2 through the fitting of the inserting bar 101, thus completing the fixing.

The connector 2 is a three-way connecting structure, including two sets of connecting ends 201 perpendicular to each other. The inserting groove 205 is provided between the two sets of connecting ends 201. In particular, the two sets of connecting ends 201 are axial symmetrical structures with the inserting groove 205 as a central line. The connecting ends 201 are provided transversally and horizontally. The connecting ends 201 are respectively provided with positioning posts 202. The transversal frames 3 and the longitudinal frames 4 are profiles, with grooves provided at their ends. The positioning posts 202 are inserted into the grooves, and through the positioning posts 202, the connections of the connectors 2 with the transversal frames 3 and the longitudinal frames 4 are completed.

In order to strengthen the stability of the connection, the connection end 201 is provided with a through-hole 203, and the ends of the transversal frame 3 and the longitudinal frame 4 are provided with a threaded hole 6. The through-hole 203 and the threaded hole 6 are provided opposite to each other, and fitted and connected through a stud 204. The stud is sequentially passed through the through-hole 203 and then threadedly connected with the threaded hole 6. In order to enhance the aesthetics, an upper end cover 206 is provided on the top of the connector 2 to obscure the internal structure of the connector 2 and improve the aesthetics.

The table board 5 is a split structure, which is formed by arranging a plurality of panels 501. Supporting brackets 301 are provided on an inner sidewall of the transversal frame 3. Supporting bases 401 are provided on an inner sidewall of the longitudinal frame 4. The panels 501 are assembled above the frame, and respectively supported by the transversal frames 3/longitudinal frames 4 and the supporting bases 401 and the supporting brackets 301 provided on the inner sidewalls in cooperation. The supporting bracket 301 is provided at the junction of two sets of panels 501 and supports the two panels 501 at the same time.

The supporting base 401 is an L-shaped bracket, and an upper side of the supporting base 401 is flush with an upper end face of the longitudinal frame 4. The supporting bracket 301 is an L-shaped bracket, and the supporting bracket 301 is flush with an upper end face of the transversal frame 3. The supporting brackets 301 are provided in multiple sets, which are distributed and provided under the panels 501.

The inserting bar 101 is provided on an upper side of the connecting base 102. An edge of an upper end face of the connecting base 102 is provided with a limiting rib 103. The connecting base 102 is inserted in the table leg 1 with the limiting rib 103 abutting and fitting with the table leg 1. A side edge of the inserting bar 101 is provided with an assembling hole. A screw is sequentially passed through the connector 2 and then inserted in a side edge of the inserting groove 205, and is assembled in the assembling hole, thus fixing the inserting bar 101 laterally.

When in use, the table board 5 includes at least two panel 501 units, and generally, 4 units, which can be matched and designed voluntarily according to the volume of the table top. The surface of the table board 5 can also be patterned through heat transfer printing. The transversal frame 3, the longitudinal frame 4, and the table leg 1 are connected through the connector 2 as the three-way connecting mechanism, two sides of which are docked with the transversal frame 3 and the longitudinal frame 4, and the bottom of which is inserted in and fitted with the table leg 1. The upper end cover 205 is provided on the top of the connector 2, which both increases the appearance aesthetics and facilitates completing assembly and disassembly within the connector 2. The leg tube of the table leg 1 may be selected from designs such as a telescopic leg tube, circular leg tube, directional leg tube, and special-shaped leg tube, etc. The bottom of the table leg 1 is also provided with an adjusting nut for adjusting the height of the table leg, specifically

Supporting brackets 301 and supporting bases 401 are provided on the inner sidewalls of the transversal frames 3 and the longitudinal frames 4, respectively, which facilitates fitting, fixing and assembling with each panel 501 unit.

Through the present solution, the table board 1 employs a modular and miniaturized design. At the same time, in the table frame, the connector 2 is optimized in design by using the design of the three-way connecting structure, which can be quickly assembled with the transversal frame and the longitudinal frame on two sides, respectively, and employs an insert-fixing structure in the bottom, which facilitates mating with different styles of leg tubes and increasing the richness of product configuration.

A non-welded structure is employed, which facilitates disassembly and assembly of the product, optimizes the packaging volume, and reduces the logistics cost. The table board employs a modular design, which makes it more versatile.

## Claims

1. A detachable outdoor table, comprising a frame, table legs (1) and connectors (2), wherein the frame comprises transversal frames (3) and longitudinal frames (4), the connectors (2) are provided between the transversal frames (3) and the longitudinal frames (4), the table legs (1) are inserted in and fitted on lower sides of the connectors (2), supporting brackets (301) are provided on an inner sidewall of the transversal frame (3), a table board (5) is lap-jointed and provided above the supporting brackets (301), and the table board (5) is a split structure, which is formed by arranging a plurality of panels (501).

2. The detachable outdoor table according to claim 1, wherein the connector (2) comprises connecting ends (201) perpendicular to each other, and the connecting ends (201) are provided transversally, and the connecting ends (201) are respectively provided with positioning posts (202), and inserted in and fitted with ends of the transversal frame (3) and/or the longitudinal frame (4) through the positioning posts (202).

3. The detachable outdoor table according to claim 2, wherein the connecting end (201) is provided with a through-hole (203), the ends of the transversal frame (3) and the longitudinal frame (4) are provided with a threaded hole (6), and the through-hole (203) and the threaded hole (6) are provided opposite to each other, and fitted and connected through a stud (204).

4. The detachable outdoor table according to claim 2 or 3, wherein the connector (2) is provided with an inserting groove (205), and a top end of the table leg (1) is provided with an inserting bar (101) that fits the inserting groove (205); and
the inserting groove (205) is provided between two sets of connecting ends (201).

5. The detachable outdoor table according to claim 4, wherein an upper end cover (206) is provided on an upper portion of the connector (2).

6. The detachable outdoor table according to claim 4, wherein the top of the table leg (101) is provided with a connecting base (102), and the inserting bar (101) is provided on an upper side of the connecting base (102).

7. The detachable outdoor table according to claim 6, wherein an edge of an upper end face of the connecting base (102) is provided with a limiting rib (103), and the connecting base (102) is inserted in the table leg (1) with the limiting rib (103) abutting and fitting with the table leg (1).

8. The detachable outdoor table according to claim 1, wherein supporting bases (401) are provided on an inner sidewall of the longitudinal frame (4), and the supporting base (401) is an L-shaped bracket, and an upper side of the supporting base (401) is flush with an upper end face of the longitudinal frame (4).

9. The detachable outdoor table according to claim 1, wherein the supporting bracket (301) is an L-shaped bracket, and the supporting bracket (301) is flush with an upper end face of the transversal frame (3), and the supporting brackets (301) are provided in multiple sets, which are distributed and provided under the panels (501).
